# FASCICULE DE BREVET EUROPEEN

(11) **EP 0 877 887 B1**
(45) Date de publication et mention de la délivrance du brevet: **20.03.2002**
(21) Numéro de dépôt: 97948992.9
(22) Date de dépôt: 03.12.1997
(51) Int. Cl.: F16L 9/06, F16L 9/147, F16L 11/15

(54) **CONDUITE FLEXIBLE A TUBE INTERNE METALLIQUE ONDULE ETANCHE AUX GAZ**
BIEGSAME ROHRLEITUNG MIT EINEM GASDICHTEN INNENWELLENROHR AUS METALL
FLEXIBLE PIPE WITH INTERNAL GASPROOF UNDULATING METAL TUBE

(30) Priorité: 04.12.1996 FR 9614892
(43) Date de publication de la demande: 18.11.1998
(73) Titulaire: COFLEXIP, 75116 Paris (FR)
(72) Inventeur: JUNG, Patrice, Jo[l, Louis, F-76940 La Mailleraye sur Seine (FR); DO, Anh, Tuan, F-95240 Cormeilles en Parisis (FR)
(74) Mandataire: Levy, David
(86) Numéro de dépôt international: FR9702192
(87) Numéro de publication internationale: WO9825063

(56) Documents cités:
- FR-A- 1 333 402
- FR-A- 1 477 478
- FR-A- 2 126 616
- US-A- 2 720 221

## Description

La présente invention concerne une conduite flexible de grande longueur, à tube interne métallique étanche et plus particulièrement une conduite flexible comprenant un tube interne métallique ondulé étanche aux gaz notamment.

La présente invention concerne également une conduite flexible pour le transport de fluides à pression élevée comme par exemple celle utilisée lors des opérations d'extraction du pétrole brut d'un gisement sous-marin. Une telle conduite doit notamment résister aux divers efforts auxquels elle est soumise, comme par exemple les pressions internes et/ou externes développées dans et sur ladite conduite flexible, et doit présenter une certaine flexibilité le long de son axe longitudinal pour qu'elle puisse se courber sans risque de rupture.

Dans des conditions extrêmes d'utilisation, comme par exemple dans les zones arctiques où il règne des conditions climatiques très difficiles ou encore pour le transport du gaz naturel liquéfié, il a été proposé d'utiliser soit des conduites rigides en acier, soit des conduites flexibles comprenant un tube onduleux métallique interne, ainsi que cela est décrit dans FR-A-2 458 022.

D'autres structures sont également décrites dans WO 96/17198 ou GB-A-1 486 445.

La conduite flexible décrite dans FR-A-2 458 022 comprend, de l'intérieur vers l'extérieur,
- un tube onduleux métallique interne ;
- une carcasse métallique enroulée autour du tube onduleux interne et constituée par des fils profilés dont le pas d'enroulement est en sens contraire du pas des ondulations dudit tube onduleux interne, cette carcasse métallique assurant la résistance à l'éclatement et appelée voûte de pression ;
- deux nappes croisées d'armures qui assurent la résistance à la traction et à l'effet de fond de la pression interne de la conduite ; et
- une gaine de protection et d'étanchéité externe.

Dans une variante, il est proposé d'utiliser comme voûte de pression, un enroulement d'un fil rond qui est logé dans le creux des ondulations du tube onduleux interne.

Toutefois, une telle conduite présente de nombreux inconvénients tant en ce qui concerne la structure que du point de vue du comportement.

Pour renforcer le tube onduleux interne, il est revêtu intérieurement d'un feuillard métallique spiralé à plat et soudé en écailles ou d'un feuillard lisse, l'espace entre les ondulations du tube interne et le feuillard étant éventuellement rempli par un matériau de bourrage. Il s'ensuit qu'on est en présence d'une structure sensiblement plus rigide qui doit être enroulée sur un fût de grand diamètre, qui est fragile lors des opérations de déroulement et d'enroulement lors de la fabrication. Lorsqu'on ne renforce pas le tube onduleux par le feuillard précité, alors tout allongement momentané de la conduite, comme cela se produit lorsqu'elle est mise en traction, peut induire un allongement permanent du tube interne conduisant parfois à une rupture. Enfin, quelle que soit la voûte de pression préconisée, il y a un risque d'ovalisation du tube interne.

Dans FR 1 333 402, il est décrit un tube ondulé qui ne comporte pas de voûte de pression enroulée sous forme de spires, en raison de la présence d'une gaine entourant le manteau et le fil de fer disposé entre les cannelures du manteau.

Dans FR 1 477 478, il est décrit un procédé de fabrication d'un tube mince et de couches externes constituées chacune par une tresse métallique. Toutefois, le rapport hauteur de gorge sur pas de spires est nécessairement supérieur à 1 puisque dans la description on indique que les creusures en forme de gorges sont relativement profondes et étroites.

En tout état de cause, la conduite flexible de l'art antérieur ne peut résister aux très hautes pressions externes qui se développent à de fortes profondeurs, de l'ordre de plusieurs milliers de mètres et/ou aux très hautes pressions internes développées dans la conduite lors des opérations d'exploitation.

La présente invention a pour but de remédier aux inconvénients précités et de proposer une conduite flexible qui non seulement est capable de résister à des pressions de plusieurs centaines de bar s'exerçant à l'extérieur et/ou à l'intérieur de la conduite, mais encore de pouvoir être utilisée sous de fortes températures et en milieu acide, c'est-à-dire présenter une bonne tenue dans un milieu corrosif et de convenir à ce que les spécialistes dénomment le "SOUR SERVICE".

La présente invention a pour objet une conduite flexible, du type comprenant de l'intérieur vers l'extérieur, un tube onduleux interne métallique, une voûte de pression obtenue par enroulement d'au moins un fil de forme autour dudit tube interne, une gaine polymérique autour de ladite voûte de pression, au moins une nappe d'armure de résistance à la traction et une gaine externe d'étanchéité, la voûte de pression présentant une surface intérieure ondulée en hélice, comprenant au moins des parties arrondies concaves et convexes, la surface extérieure du tube métallique interne étant en appui dans sa partie arrondie concave sur une partie convexe de la surface intérieure de la voûte de pression et dans sa partie arrondie convexe sur une partie concave de la surface intérieure de la voûte de pression, lesdites surfaces intérieure de la voûte et extérieure du tube interne étant en correspondance de forme, et elle est caractérisée en ce que le rapport de la hauteur (h) d'une ondulation (8) au pas (T) de ladite ondulation est inférieur à 1 et supérieur à 0,035, l'interstice (i) entre deux spires consécutives étant faible mais non nul.

Selon une autre caractéristique, la conduite flexible est caractérisée en ce que la voûte de pression est réalisée à partir d'un fil enroulé autour dudit tube interne, chaque spire étant de largeur sensiblement égale à une période de l'ondulation du tube interne.

Selon une autre caractéristique, la conduite flexible est caractérisée en ce que l'interstice entre deux spires consécutives est situé sensiblement à l'aplomb d'une crête de l'ondulation du tube interne.

Selon une autre caractéristique, la conduite flexible est caractérisée en ce que l'interstice entre deux spires consécutives est situé sensiblement à l'aplomb d'un creux de l'ondulation du tube interne.

Selon une autre caractéristique, la conduite flexible est caractérisée en ce que la voûte de pression est réalisée à partir de plusieurs fils enroulés autour du tube interne.

Selon une autre caractéristique, la conduite flexible est caractérisée en ce que le tube onduleux interne présente des ondulations dont le rayon de courbure (R) d'une crête est supérieur ou égal au rayon de courbure (r) d'un creux.

Selon une autre caractéristique, la conduite flexible est caractérisée en ce que le tube onduleux interne est réalisé en un matériau métallique de faible module d'élasticité et résistant en milieu corrosif.

D'autres avantages et caractéristiques ressortiront mieux à la lecture de la description de plusieurs modes de réalisation selon l'invention, ainsi que des dessins annexés sur lesquels :
- la figure 1 est une vue en perspective et partielle d'une conduite flexible selon l'invention, dont certaines parties ne sont pas complètes ;
- la figure 2 est une représentation partielle et schématique d'une section longitudinale de la conduite flexible de la figure 1 ;
- la figure 3 est une vue agrandie partielle d'une partie de la figure 2, la conduite étant en flexion ;
- la figure 4 est une vue en coupe et partielle du tube onduleux interne représenté sur les figures 1 à 3 ;
- la figure 5 est une vue en coupe schématique et partielle d'un ensemble voûte-tube onduleux interne, selon un premier mode de réalisation de l'invention,
- la figure 6 est une vue en coupe schématique et partielle d'un ensemble voûte-tube onduleux interne, selon un autre mode de réalisation de l'invention ;
- la figure 7 est une vue en coupe schématique et partielle d'un ensemble voûte-tube onduleux interne, selon un autre mode de réalisation de l'invention ;
- les figures 8 et 9 sont respectivement des vues en coupe schématiques et partielles des ensembles voûte-tube onduleux interne selon d'autres modes de réalisation de l'invention.

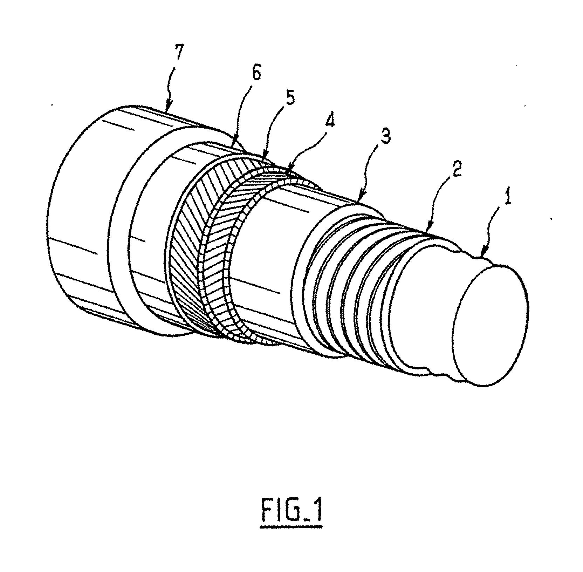

La conduite flexible selon l'invention, telle que représentée sur la figure 1 comprend, de l'intérieur vers l'extérieur, un tube onduleux interne métallique 1, une voûte de pression 2, une gaine 3, en général en matière thermoplastique à haut point de fusion, destinée à empêcher un aplatissement lors des fortes pressions externes s'exerçant sur ladite conduite et dénommée par les spécialistes comme étant une gaine anticollapse, deux nappes d'armures croisées 4 et 5, les fils d'armures d'une nappe faisant un angle inférieur à 55° par rapport à l'axe longitudinal A de la conduite, une bande intermédiaire 6 et enfin une gaine d'étanchéité externe 7. A l'exception du tube interne 1 et de la voûte de pression 2 qui font l'objet de la présente invention, tous les autres éléments constitutifs de la conduite sont bien connus des spécialistes et ne seront donc pas décrits dans le détail, même si certains d'entre eux comme la bande 6 ont fait l'objet de perfectionnements récents, notamment par la demanderesse.

Le tube onduleux interne métallique 1 dénommé dans ce qui suit comme étant un liner, et représenté sur les figures 1 à 7, est un tube métallique présentant des ondulations 8 régulièrement espacées sur toute la longueur, la périodicité des crêtes des ondulations ou des creux étant définie, pour des raisons de commodité, par une période T, encore qu'on puisse également la désigner par le terme de pas qui est utilisée pour les enroulements.

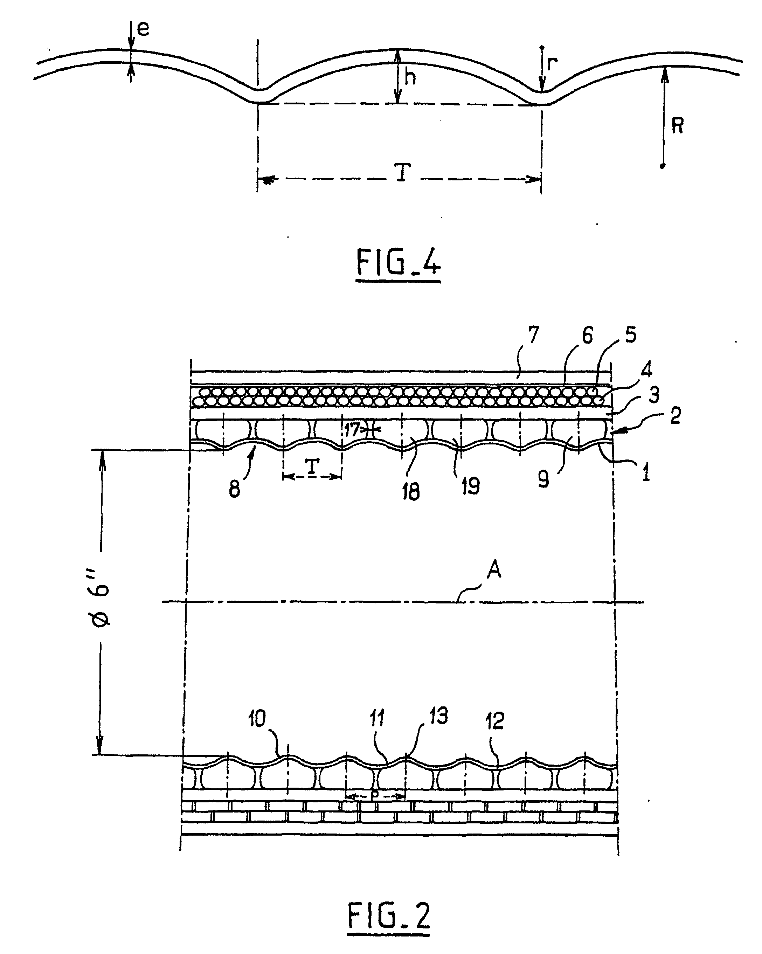

La période T ou pas de l'ondulation (figure 2) est identifiée, par convention, par la projection de l'ondulation sur l'axe longitudinal A de la conduite et ce parce que l'angle de l'hélice formé par l'ondulation est proche de 90° par rapport à l'axe longitudinal A de la conduite.

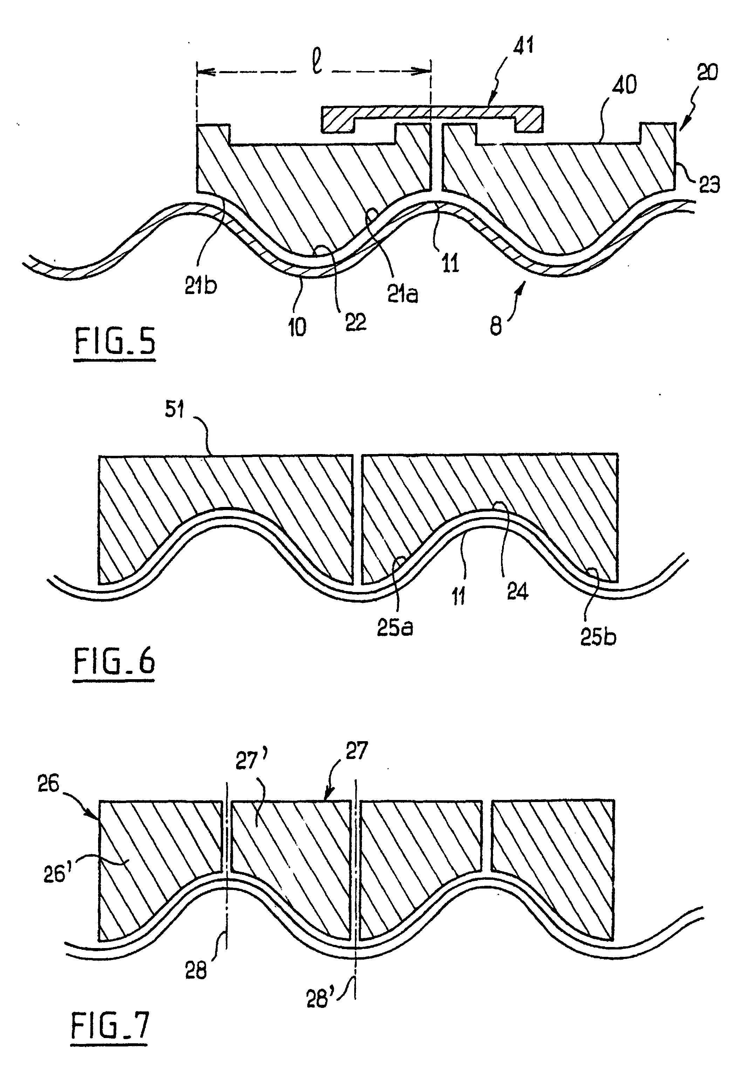

Dans une forme de réalisation préférée de l'invention, le liner 1 est constitué par un tube métallique étanche d'épaisseur minimum de 0,15 millimètre et à faible ondulation en hélice c'est-à-dire présentant une hauteur h relativement faible. La forme de l'ondulation est définie de manière à permettre l'allongement sous pression sans risque de rupture, l'enroulement pour un diamètre défini et augmenter la flexibilité. Les essais effectués ont montré que le rayon de courbure R d'une crête devait être moins égal au rayon de courbure r d'un creux (figure 4). De préférence, le rayon R doit être compris entre 1,5 et 10 fois le rayon r et mieux encore entre 3 à 5 fois le rayon de courbure r.

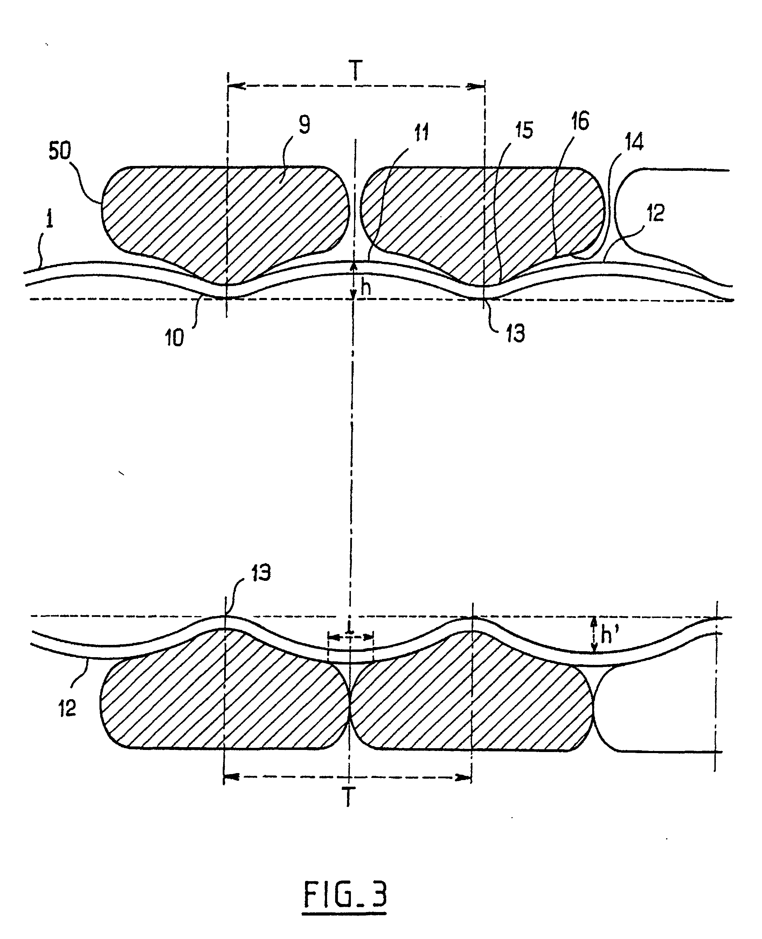

La voûte de pression 2 est constituée, dans un premier exemple de réalisation représenté sur les figures 2 et 3, par un enroulement hélicoïdal d'un fil de forme 9 autour du liner 1.

L'ondulation 8 du liner 1, vue de l'extérieur, comprend des parties concaves 10 et des parties convexes 11, la période T étant égale à la distance séparant deux crêtes successives 12 ou deux creux successifs 13 de ladite ondulation 8.

Le fil de forme 9 constituant la voûte de pression 2 comprend sur sa surface intérieure 14 des parties arrondies convexes 15 et des parties concaves 16. Les parties concaves 10 du liner 1 sont en appui sur les parties convexes 15 du fil de forme et plus généralement les parties concaves du liner 1 sont en appui sur les parties convexes de la surface intérieure de la voûte de pression 2, prise dans son ensemble et ce, lorsque la conduite flexible est rectiligne, comme cela est représenté sur la figure 2.

Le fil de forme 9 est enroulé hélicoïdalement en formant des spires qui sont espacées, le jeu 17 entre deux spires consécutives 18, 19, pouvant être nul lorsque la conduite est mise en flexion. Dans le cas de la figure 3 où le fil de forme 9 est arrondi sur les bords latéraux 50, le jeu 17 ne correspond pas à l'interstice i alors que sur les figures 5 à 7, le jeu est égal à l'interstice i car les bords latéraux du fil de forme sont rectilignes et perpendiculaires à l'axe longitudinal A. Par interstice i, on entend l'espace séparant deux spires consécutives compté sur la surface intérieure de la voûte de pression 2.

La correspondance entre la surface extérieure du liner 1 avec la surface intérieure de la voûte de pression, conduit à déterminer des parties en appui qui présentent des caractéristiques géométriques sensiblement identiques. C'est ainsi que les parties convexes 15 de la surface intérieure de la voûte de pression présentent un rayon de courbure qui est égal au rayon de courbure r des parties concaves 10 de la surface extérieure du liner 1.

Dans le cas des figures 2 et 3, le pas d'enroulement P du fil de forme 9 est égal à la période T de l'ondulation 8 du liner 1, et le jeu 17 entre deux spires consécutives 18, 19 est situé en regard de la crête ou sommet 12 de l'ondulation 8.

Comme on peut le voir sur la figure 3, les spires 18, 19 ne sont pas tout à fait jointives à l'extrados (partie supérieure de la figure), alors qu'elles sont jointives à l'intrados (partie inférieure de la figure) en raison du fait que la conduite flexible est en flexion.

La correspondance de forme entre la surface extérieure du liner 1 et la surface intérieure de la voûte de pression 2 et du fait de leur appui sur une grande proportion et du jeu faible entre spires, entraîne que, lorsque la conduite est mise en flexion, la fibre neutre qui est normalement en coïncidence avec l'axe longitudinal A, peut se déplacer légèrement vers la surface du liner à l'intrados. On évite ou on diminue fortement ainsi les risques de flambage localisé dans les parties concaves et/ou convexes du liner 1 à l'intrados. De ce fait, le jeu 17 entre les spires consécutives qui existait à l'intrados disparaît et lesdites spires sont jointives, alors qu'à l'extrados le jeu 17 augmente et le liner 1 est donc mis en traction, le pas d'enroulement et la période de l'ondulation augmentant à leur tour. Les parties convexes 11 du liner 1 se décollent partiellement de la surface intérieure de la voûte de pression et travaillent à la manière d'une membrane lorsqu'un fluide sous pression circule dans la conduite flexible.

Dans un mode de réalisation préféré de l'invention, le rapport de la hauteur h de l'ondulation 8 à l'épaisseur e du liner 1 est compris entre 1 et 30 et de préférence entre 1,5 et 20 (figure 4). De plus, le rapport h/T est inférieur à 1 et supérieur à 0,05, de préférence, compris entre 0,15 et 0,35. Le jeu 17 entre spires consécutives étant faible et inférieur à 0,15 1, 1 étant la largeur d'une spire.

Pour éviter que le liner 1 ne se déforme sous l'effet de la pression interne du fluide circulant dans la conduite flexible et pour assurer un contact entre le liner 1 et la voûte de pression 2 sur toute la circonférence du liner 1, il est préférable d'utiliser des matériaux à faible module d'élasticité comme certains aciers, le titane, l'aluminium ou des alliages d'aluminium. Le choix du matériau devra tenir compte de la résistance au milieu corrosif.

Comme le liner 1 est étanche aux gaz et résistant à un milieu corrosif, il n'est plus nécessaire de prendre en compte le critère de résistance à un milieu corrosif pour le choix du matériau constituant notamment la voûte de pression 2. Pour cette dernière, il suffit de choisir un matériau présentant des hautes caractéristiques mécaniques et pouvant être facilement formable. Parmi les matériaux possibles on peut citer un acier de type XC 35 selon les normes usuelles. Ceci est également vrai pour les armures de traction ; de ce fait, il est possible de réduire considérablement le poids et le coût de la conduite flexible.

Enfin, en raison de l'étanchéité aux gaz obtenue avec le liner métallique 1, la gaine anticollapse 3 peut être réalisée dans un matériau moins noble que celui utilisé habituellement dans les conduites flexibles, le seul critère à prendre en considération étant la tenue en température.

Sur la figure 5 est représenté un autre mode de réalisation dans lequel le liner 1 est identique à celui représenté sur les figures 2 à 4 mais dont la voûte de pression 2 est réalisée avec un fil de forme 20 dont chaque spire présente deux parties concaves 21a et 21b situées de part et d'autre d'une partie convexe 22. De ce fait, les parties concaves 21a et 21b de deux spires consécutives épousent la partie convexe 11 du liner 1, le jeu 17 existant entre les deux spires consécutives étant égal à l'interstice i et il est situé en regard de la crête ou sommet 12 de la partie convexe 11 et ce, parce que les bords latéraux 23 du fil de forme 20 sont rectilignes et perpendiculaires à l'axe longitudinal A. De plus, la largeur 1 de chaque spire est sensiblement égale à la période T de l'ondulation.

La figure 6 représente un mode de réalisation qui est analogue à celui de la figure 5, à la différence que chaque spire comprend une partie concave 24 qui épouse la forme de la partie convexe 11 correspondante du liner 1, ladite partie concave 24 étant entourée par deux parties convexes 25a et 25b. Dans ce cas, l'interstice i est situé en regard du creux de l'ondulation.

Dans un autre mode de réalisation représenté sur la figure 7, la voûte de pression 2 est constituée par deux enroulements alternés de fils de forme 26 et 27 qui sont de telle sorte que deux spires consécutives 26' et 27' soient symétriques par rapport aux plans de jonction 28 et 28'. Le plan de jonction 28' passe par le sommet d'un creux de l'ondulation 8 alors que le plan de jonction 28 passe par le sommet de la crête de ladite ondulation, l'objectif étant que deux spires consécutives 26', 27' des deux enroulements alternés forment quelque chose d'analogue à la spire unique des figures 5 ou 6.

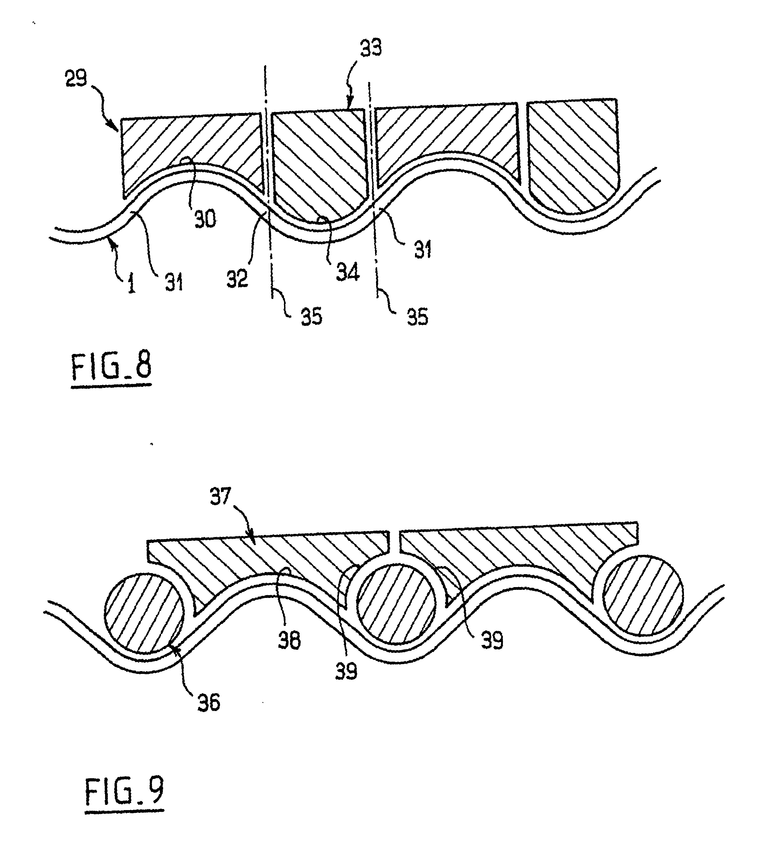

Sur la figure 8 est représenté un autre mode de réalisation dans lequel le liner 1 est identique aux modes de réalisation précédents, alors que la voûte de pression 2 est constituée par un enroulement de deux fils de forme différents. Le premier fil de forme 29 présente une partie 30, de forme concave épousant la partie convexe du liner 1, et s'étendant entre deux points d'inflexion consécutifs 31, 32 d'une ondulation. Le deuxième fil de forme 33 présente une partie 34 de forme convexe épousant la partie concave du liner 1 et s'étendant entre deux points d'inflexion consécutifs ; l'ensemble des fils de forme 29 et 33 peut être assimilé à une spire unique qui aurait une largeur égale à la période T de l'ondulation, aux interstices près. Dans ce cas, les interstices sont situés en regard de la partie médiane 35 de l'ondulation se trouvant entre les parties convexe et concave du liner 1.

La figure 9 représente un autre mode de réalisation dans lequel la voûte de pression est constituée par un enroulement de deux fils différents 36, 37.

Le fil de forme 36 est un fil rond dont le rayon est sensiblement égal au rayon r et il est logé dans les creux de l'ondulation 8.

Le fil de forme 37 est plus complexe et il est adapté, dans sa partie centrale 38 pour épouser la forme de la partie convexe de l'ondulation 8, la zone de jonction entre les deux fils de forme 36 et 37 étant située sensiblement à l'aplomb du creux de l'ondulation. Les parties latérales 39 du fil de forme 37 doivent bien évidemment correspondre au fil rond 36 pour respecter une certaine homogénéité.

Dans tous les modes de réalisation, les spires consécutives ou adjacentes peuvent présenter sur leur surface externe des évidements 40 qui coopèrent avec des organes de liaison tels que des clips 41 pour relier entre elles deux spires consécutives ou adjacentes, limitant ainsi un allongement excessif de la voûte de pression (figure 5).

Pour faciliter l'extrusion de la gaine anticollapse 3 sur la voûte de pression 2, cette dernière présente une surface extérieure cylindrique 42 lorsque la conduite est droite, ainsi que cela est représenté sur les figures.

La surface extérieure cylindrique 42 constitue une bonne surface d'appui pour la gaine anticollapse 3.

Il faut noter par ailleurs que selon l'invention, chaque armure 4, 5 entourant la gaine anticollapse 3, est constituée par l'enroulement hélicoïdal d'au moins une nappe de fil enroulé avec un angle d'armage inférieur à 55°. De préférence, la conduite flexible comprend deux nappes de fils enroulés 4, 5 avec un même angle d'armage mais en sens opposés, lesdites nappes étant elles-mêmes entourées par une gaine de protection et d'étanchéité 7 avec interposition ou non d'un ruban 6.

On peut réaliser l'enroulement de la voûte de pression 2 avec une paire de fils identiques ou avec deux paires de fils de forme, chacune de ces dernières paires comprenant un fil de forme d'une section donnée et un autre fil de forme de section qui correspond à la section donnée.

Un procédé de réalisation préféré de l'ensemble voûte de pression 2-liner 1, consiste à :
- dérouler, à partir d'un rouleau d'alimentation, un feuillard de grande longueur et de faible épaisseur,
- faire passer ledit feuillard dans des moyens de mise en forme pour lui conférer progressivement la forme d'un cylindre creux,
- réaliser en continu, sur une génératrice ou en hélice, une soudure entre les bords libres pour constituer un tube creux étanche cylindrique,
- faire passer le tube creux étanche dans des moyens d'ondulation, par exemple constitués par des galets presseurs et éventuellement d'un noyau tournant et présentant une surface ondulée hélicoïdale, et à
- réaliser l'enroulement d'un ou plusieurs fils de forme autour du tube interne ondulé.

Un tel ensemble peut être enroulé en grande longueur sur une bobine de stockage en attente de réalisation complète du flexible.

Bien évidemment, d'autres procédés de fabrication peuvent être utilisés. Parmi ceux là, on peut citer celui consistant à rabouter des longueurs de cylindres creux et de faibles longueurs, puis de former les ondulations nécessaires sur ledit tube creux ainsi obtenu avant l'enroulement du ou des fils de forme constituant la voûte de pression.

## Revendications

1. Conduite flexible du type comportant un tube métallique interne étanche (1), dont la paroi présente des ondulations hélicoïdales (8), la surface extérieure dudit tube interne présentant au moins des parties arrondies concaves (10) et convexes (11) correspondant respectivement aux parties interne et externe des ondulations, ainsi qu'au moins une voûte de pression (2) disposée autour dudit tube métallique interne et constituée par au moins un fil métallique de forme (9) enroulé sous forme de spires que la voûte de pression (2) présente une surface intérieure ondulée en hélice, comprenant au moins des parties arrondies concaves (16) et convexes (15), la surface extérieure du tube métallique interne étant en appui dans sa partie arrondie concave (10) sur une partie convexe (15) de la surface intérieure de la voûte de pression (2) et dans sa partie arrondie convexe (11) sur une partie concave (16) de la surface intérieure de la voûte de pression, lesdites surfaces intérieure de la voûte et extérieure du tube interne étant en correspondance de forme, **caractérisée en ce que** le rapport de la hauteur (h) d'une ondulation (8) au pas (T) de ladite ondulation est inférieur à 1 et supérieur à 0,035, l'interstice (i) entre deux spires consécutives de l'enroulement de la voûte de pression étant faible mais non nul.

2. Conduite selon la revendication 1, **caractérisée en ce que** la hauteur de l'ondulation (h) est relativement faible, le rapport de ladite hauteur à l'épaisseur du tube interne métallique est compris entre 1 et 30, de préférence entre 1,5 et 20.

3. Conduite selon la revendication 1 ou 2, **caractérisée en ce que** les parties convexes (11) du tube interne (1) présentent un rayon de courbure (R) qui est au moins égal au rayon de courbure (r) des parties concaves (10) dudit tube interne (1), le rapport des rayons de courbure (R/r) étant compris entre 1 et 10 et, de préférence, entre 1,5 et 5.

4. Conduite selon la revendication 1 ou 2, **caractérisée en ce que** la voûte de pression (2) est constituée par un enroulement de plusieurs fils de forme (29, 33), un desdits fils de forme (29) comprenant seulement des parties concaves (30) et un autre fil de forme (33) comportant seulement des parties convexes (34).

5. Conduite selon l'une quelconque des revendications 1 à 4, **caractérisée en ce que** les interstices (i) entre spires consécutives sont situés en regard de la crête (12) de l'ondulation du tube métallique interne.

6. Conduite selon l'une quelconque des revendications 1 à 4, **caractérisée en ce que** les interstices (i) entre spires consécutives sont situés sensiblement au milieu du creux (13) de l'ondulation du tube métallique interne.

7. Conduite selon l'une quelconque des revendications 1 à 4, **caractérisée en ce que** les interstices (i) entre spires consécutives sont disposés en regard de la partie médiane (31, 32) de l'ondulation (8) se trouvant entre les parties respectivement convexe (11) et concave (10), dudit tube interne.

8. Conduite selon la revendication 1, 2, 5, 6 ou 7, **caractérisée en ce que** la section dudit au moins un fil de forme dans un plan longitudinal présente une largeur maximale (1) parallèlement à l'axe (A) de la conduite flexible qui est légèrement inférieure au pas (T) de l'ondulation (8) dudit tube interne, la différence entre ladite largeur (1) et le pas (T) de l'ondulation correspondant au jeu (17) entre deux spires consécutives dudit fil de forme.

9. Conduite selon l'une quelconque des revendications 1 à 7, **caractérisée en ce que** la section dudit au moins un fil de forme dans un plan longitudinal présente une largeur maximale (1) parallèlement à l'axe de la conduite flexible qui est légèrement inférieure à la demi-période de l'ondulation dudit tube interne, la différence entre ladite largeur et la demi-période de l'ondulation correspondant au jeu entre deux spires consécutives dudit au moins un fil de forme.

10. Conduite selon l'une quelconque des revendications 1 à 9, **caractérisée en ce que** la section droite dudit au moins un fil de forme présente deux bords latéraux (29) rectilignes et perpendiculaires à l'axe de la conduite flexible.

11. Conduite selon l'une quelconque des revendications 1 à 9, **caractérisée en ce que** la section droite dudit au moins un fil de forme présente deux bords latéraux légèrement convexes (50).

12. Conduite selon l'une quelconque des revendications 1 à 11, **caractérisée en ce que** le tube interne métallique est étanche aux gaz.

13. Conduite selon l'une quelconque des revendications 1 à 12, **caractérisée en ce que** le tube interne métallique est de faible épaisseur (e) au moins égale à 0,15 mm.

14. Conduite selon l'une quelconque des revendications 1 à 13, **caractérisée en ce que** le tube métallique interne est résistant en milieu corrosif.

15. Conduite selon l'une quelconque des revendications 1 à 14, **caractérisée en ce que** la voûte de pression (2) est en acier à haute résistance mécanique.

16. Conduite selon la revendication 1, **caractérisée en ce qu'**elle comporte en outre une gaine plastique (3) disposée autour de la voûte de pression (2) et que la surface extérieure (51) de la voûte de pression présente une forme générale approximativement cylindrique lorsque la conduite est droite de manière à constituer une surface d'appui pour ladite gaine plastique.

17. Conduite selon la revendication 1 ou 2, **caractérisée en ce qu'**elle comporte en outre à l'extérieur de la gaine plastique (3) entourant ladite voûte de pression (2) une armature (4, 5) résistant à la traction constituée par l'enroulement hélicoïdal d'au moins une nappe de fil (4, 5) enroulée avec un angle d'armage inférieur à 55°.

18. Conduite selon la revendication 17, **caractérisée en ce que** l'armature résistant à la traction comporte deux nappes de fils (4, 5) enroulés avec un même angle d'armage et en sens opposés et que la conduite flexible comporte en outre une enveloppe de protection (7) à l'extérieur desdites nappes d'armures.

19. Conduite selon l'une des revendications 17, 18, **caractérisée en ce que** les armures de traction sont réalisées en matériau à haut module d'élasticité et haute résistance mécanique.

20. Conduite selon l'une des revendications précédentes, **caractérisée en ce que** les fils de forme constituant les spires de la voûte de pression (2) présentent chacun un évidement (40) et **en ce qu'**elle comprend, en outre, des organes de liaison (41) susceptibles de relier entre elles deux spires consécutives.

## Patentansprüche

1. Flexible Rohrleitung des Typs, der ein dichtes metallisches Innenrohr (1), dessen Wand schraubenlinienförmige Wellenlinien (8) aufweist, wobei die äußere Oberfläche des Innenrohrs wenigstens konkave (10) und konvexe (11) abgerundete Teile aufweist, die den inneren bzw. äußeren Abschnitten der Wellenlinien entsprechen, sowie wenigstens eine Druckkalotte (2) umfaßt, die um das metallische Innenrohr angeordnet ist und aus wenigstens einem metallischen Formdraht (9) gebildet ist, der in Form von Windungen gewickelt ist, wobei die Druckkalotte (2) eine schraubenlinienförmig gewellte innere Oberfläche aufweist, die wenigstens konkave (16) und konvexe (15) abgerundete Abschnitte umfaßt, wobei sich die äußere Oberfläche des metallischen Innenrohrs mit ihrem konkaven abgerundeten Abschnitt (10) auf einem konvexen Abschnitt (15) der inneren Oberfläche der Druckkalotte (2) abstützt und mit ihrem konvexen abgerundeten Abschnitt (11) auf einem konkaven Abschnitt (16) der inneren Oberfläche der Druckkalotte abstützt, wobei sich die innere Oberfläche der Kalotte und die äußere Oberfläche des Innenrohrs hinsichtlich ihrer Form entsprechen, **dadurch gekennzeichnet, daß** das Verhältnis der Höhe (h) einer Wellenlinie (8) zur Schrittweite (T) der Wellenlinie kleiner als 1 und größer als 0,035 ist, wobei der Zwischenraum (i) zwischen zwei aufeinanderfolgenden Windungen der Wicklung der Druckkalotte gering, jedoch nicht null ist.

2. Rohrleitung nach Anspruch 1, **dadurch gekennzeichnet, daß** die Höhe der Wellenlinie (h) verhältnismäßig gering ist und das Verhältnis der Höhe zur Dicke des metallischen Innenrohrs im Bereich von 1 bis 30 und vorzugsweise von 1,5 bis 20 liegt.

3. Rohrleitung nach Anspruch 1 oder 2, **dadurch gekennzeichnet, daß** die konvexen Abschnitte (11) des Innenrohrs (1) einen Krümmungsradius R aufweisen, der wenigstens gleich dem Krümmungsradius (r) der konkaven Abschnitte (10) des Innenrohrs (1) ist, wobei das Verhältnis (R/r) der Krümmungsradien im Bereich von 1 bis 10 und vorzugsweise von 1,5 bis 5 liegt.

4. Rohrleitung nach Anspruch 1 oder 2, **dadurch gekennzeichnet, daß** die Druckkalotte (2) durch eine Wicklung aus mehreren Formdrähten (29, 33) gebildet ist, wobei einer der Formdrähte (29) ausschließlich konkave Abschnitte (30) umfaßt und ein anderer Formdraht (33) ausschließlich konvexe Abschnitte (34) umfaßt.

5. Rohrleitung nach einem der Ansprüche 1 bis 4, **dadurch gekennzeichnet, daß** sich die Zwischenräume (i) zwischen aufeinanderfolgenden Windungen gegenüber dem Scheitel (12) der Wellenlinie des metallischen Innenrohrs befinden.

6. Rohrleitung nach einem der Ansprüche 1 bis 4, **dadurch gekennzeichnet, daß** sich die Zwischenräume (i) zwischen aufeinanderfolgenden Windungen im wesentlichen in der Mitte des Tals (13) der Wellenlinie des metallischen Innenrohrs befinden.

7. Rohrleitung nach einem der Ansprüche 1 bis 4, **dadurch gekennzeichnet, daß** die Zwischenräume (i) zwischen aufeinanderfolgenden Windungen gegenüber dem Mittelabschnitt (31, 32) der Wellenlinie (8) zwischen konvexen (11) und konkaven (10) Abschnitten des Innenrohrs angeordnet sind.

8. Rohrleitung nach Anspruch 1, 2, 5, 6 oder 7, **dadurch gekennzeichnet, daß** der Querschnitt des wenigstens einen Formdrahts in einer longitudinalen Ebene eine maximale Breite (1) parallel zur Achse (A) der flexiblen Rohrleitung aufweist, die etwas kleiner als die Schrittweite (T) der Wellenlinie (8) des Innenrohrs ist, wobei die Differenz zwischen der Breite (1) und der Schrittweite (T) der Wellenlinie dem Zwischenraum (17) zwischen zwei aufeinanderfolgenden Windungen des Formdrahts entspricht.

9. Rohrleitung nach einem der Ansprüche 1 bis 7, **dadurch gekennzeichnet, daß** der Querschnitt des wenigstens einen Formdrahts in einer longitudinalen Ebene eine maximale Breite (1) parallel zur Achse der flexiblen Rohrleitung aufweist, die etwas kleiner als die halbe Periode der Wellenlinie des Innenrohrs ist, wobei die Differenz zwischen der Breite und der halben Periode der Wellenlinie dem Zwischenraum zwischen zwei aufeinanderfolgenden Windungen des wenigstens einen Formdrahts entspricht.

10. Rohrleitung nach einem der Ansprüche 1 bis 9, **dadurch gekennzeichnet, daß** der Querschnitt des wenigstens einen Formdrahts zwei geradlinige und zur Achse der flexiblen Rohrleitung senkrechte Seitenkanten (29) aufweist.

11. Rohrleitung nach einem der Ansprüche 1 bis 9, **dadurch gekennzeichnet, daß** der Querschnitt des wenigstens einen Formdrahts zwei leicht konvexe Seitenkanten (50) aufweist.

12. Rohrleitung nach einem der Ansprüche 1 bis 11, **dadurch gekennzeichnet, daß** das metallische Innenrohr gasdicht ist.

13. Rohrleitung nach einem der Ansprüche 1 bis 12, **dadurch gekennzeichnet, daß** das metallische Innenrohr eine geringe Dicke (e), die wenigstens gleich 0,15 mm ist, besitzt.

14. Rohrleitung nach einem der Ansprüche 1 bis 13, **dadurch gekennzeichnet, daß** das metallische Innenrohr einem korrosiven Milieu widersteht.

15. Rohrleitung nach einem der Ansprüche 1 bis 14, **dadurch gekennzeichnet, daß** die Druckkalotte (2) aus Stahl mit hohem mechanischen Widerstand ist.

16. Rohrleitung nach Anspruch 1, **dadurch gekennzeichnet, daß** sie außerdem eine um die Druckkalotte (2) angeordnete Kunststoffhülle (3) umfaßt und daß die äußere Oberfläche (51) der Druckkalotte eine angenähert zylindrische allgemeine Form aufweist, wenn die Rohrleitung gerade ist, so daß eine Abstützfläche für die Kunststoffhülle gebildet wird.

17. Rohrleitung nach Anspruch 1 oder 2, **dadurch gekennzeichnet, daß** sie außerdem außerhalb der die Druckkalotte (2) umgebenden Kunststoffhülle (3) eine zugfeste Bewehrung (4, 5) aufweist, die durch die schraubenlinienförmige Wicklung wenigstens eines Drahtgewebes (4, 5), das mit einem Wicklungswinkel von weniger als 55° gewickelt ist, gebildet ist.

18. Rohrleitung nach Anspruch 17, **dadurch gekennzeichnet, daß** die zugfeste Bewehrung zwei Drahtgewebe (4, 5) umfaßt, die mit demselben Wicklungswinkel und in entgegengesetzter Richtung gewickelt sind, und daß die flexible Rohrleitung außerdem außerhalb der Bewehrungsgewebe eine Schutzhülle (7) aufweist.

19. Rohrleitung nach einem der Ansprüche 17, 18, **dadurch gekennzeichnet, daß** die Zugbewehrungen aus einem Werkstoff mit hohem Elastizitätsmodul und hohem mechanischen Widerstand verwirklicht sind.

20. Rohrleitung nach einem der vorhergehenden Ansprüche, **dadurch gekennzeichnet, daß** die Formdrähte, die die Windungen der Druckkalotte (2) bilden, jeweils eine Aussparung (40) aufweisen und daß sie außerdem Verbindungsorgane (41) aufweist, die zwei aufeinanderfolgende Windungen miteinander verbinden können.

## Claims

1. Flexible pipe of the type comprising an impermeable internal metal tube (1), the wall of which has helical corrugations (8), the outer surface of the said internal tube having at least concave rounded parts (10) and convex rounded parts (11) corresponding, respectively, to the internal part and external part of the corrugations, as well as at least one pressure vault (2) placed around the said internal metal tube and consisting of at least one shaped metal wire (9) wound in the form of turns, the pressure vault (2) having a helical corrugated inner surface comprising at least concave rounded parts (16) and convex rounded parts (15), the outer surface of the internal metal tube bearing in its concave rounded part (10) on a convex part (15) of the inner surface of the pressure vault (2) and in its convex rounded part (11) on a concave part (16) of the inner surface of the pressure vault, the said inner surface of the vault and the said outer surface of the internal tube being in shape correspondence, **characterized in that** the ratio of the height (h) of a corrugation (8) to the pitch (T) of the said corrugation is less than 1 and greater than 0.035, the gap (i) between two consecutive turns of the winding of the pressure vault being small but not zero.

2. Pipe according to Claim 1, **characterized in that** the height of the corrugation (h) is relatively small, the ratio of the said height to the thickness of the metal internal tube is between 1 and 30 and preferably between 1.5 and 20.

3. Pipe according to Claim 1 or 2, **characterized in that** the convex parts (11) of the internal tube (1) have a radius of curvature (R) which is at least equal to the radius of curvature (r) of the concave parts (10) of the said internal tube (1), the ratio of the radii of curvature (R/r) being between 1 and 10 and preferably between 1.5 and 5.

4. Pipe according to Claim 1 or 2, **characterized in that** the pressure vault (2) consists of a winding of several shaped wires (29, 33), one of the said shaped wires (29) comprising only concave parts (30) and another shaped wire (33) comprising only convex parts (34).

5. Pipe according to any one of Claims 1 to 4, **characterized in that** the gaps (i) between consecutive turns lie opposite the crest (12) of the corrugation of the internal metal tube.

6. Pipe according to any one of Claims 1 to 4, **characterized in that** the gaps (i) between consecutive turns lie more or less in the middle of the trough (13) of the corrugation of the internal metal tube.

7. Pipe according to any one of Claims 1 to 4, **characterized in that** the gaps (i) between consecutive turns lie opposite the mid-part (31, 32) of the corrugation (8), lying between the convex part (11) and concave part (10), respectively, of the said internal tube.

8. Pipe according to Claim 1, 2, 5, 6 or 7, **characterized in that** the cross-section of the said at least one shaped wire in a longitudinal plane has a maximum width (1) parallel to the axis (A) of the flexible pipe which is slightly less than the pitch (T) of the corrugation (8) of the said internal tube, the difference between the said width (1) and the pitch (T) of the corrugation corresponding to the clearance (17) between two consecutive turns of the said shaped wire.

9. Pipe according to any one of Claims 1 to 7, **characterized in that** the cross-section of the said at least one shaped wire in a longitudinal plane has a maximum width (1) parallel to the axis of the flexible pipe which is slightly less than the half-period of the corrugation of the said internal tube, the difference between the said width and the half-period of the corrugation corresponding to the clearance between two consecutive turns of the said at least one shaped wire.

10. Pipe according to any one of Claims 1 to 9, **characterized in that** the cross-section of the said at least one shaped wire has two lateral edges (29) which are straight and perpendicular to the axis of the flexible pipe.

11. Pipe according to any one of Claims 1 to 9, **characterized in that** the cross-section of the said at least one shaped wire has two slightly convex lateral edges (50).

12. Pipe according to any one of Claims 1 to 11, **characterized in that** the metal internal tube is gas-impermeable.

13. Pipe according to any one of Claims 1 to 12, **characterized in that** the metal internal tube has a small thickness (e) at least equal to 0.15 mm.

14. Pipe according to any one of Claims 1 to 13, **characterized in that** the internal metal tube is resistant to a corrosive medium.

15. Pipe according to any one of Claims 1 to 14, **characterized in that** the pressure vault (2) is made of steel having a high mechanical strength.

16. Pipe according to Claim 1, **characterized in that** it furthermore includes a plastic sleeve (3) placed around the pressure vault (2) and **in that** the outer surface (51) of the pressure vault has an approximately cylindrical general shape when the pipe is straight so as to form a bearing surface for the said plastic sleeve.

17. Pipe according to Claim 1 or 2, **characterized in that** it furthermore includes, on the outside of the plastic sleeve (3) surrounding the said pressure vault (2), an armouring (4, 5) resistant to tensile loads, consisting of the helical winding of at least one ply of wire (4, 5) wound at a setting angle of less than 55°.

18. Pipe according to Claim 17, **characterized in that** the armouring resistant to tensile loads comprises two plies of wires (4, 5) wound at the same setting angle but in opposite directions and **in that** the flexible pipe furthermore includes a protective sleeve (7) on the outside of the said armouring plies.

19. Pipe according to one of Claims 17 and 18, **characterized in that** the tension armouring is made of a material having a high modulus of elasticity and a high mechanical strength.

20. Pipe according to one of the preceding claims, **characterized in that** the shaped wires forming the turns of the pressure vault (2) each have a recess (40) and **in that** it furthermore comprises connecting devices (41) capable of connecting two consecutive turns together.
